# EUROPEAN PATENT SPECIFICATION

(11) **EP 3 257 737 B1**
(45) Date of publication and mention of the grant of the patent: **22.05.2019**
(21) Application number: 17176085.3
(22) Date of filing: 14.06.2017
(51) Int. Cl.: B62M 9/08

(54) **SPEED VARIATOR SYSTEM FOR A BICYCLE**
DREHZAHLVARIATOR FÜR EIN FAHRRAD
VARIATEUR DE VITESSE POUR UNE BICYCLETTE

(30) Priority: 16.06.2016 IT UA20164443
(43) Date of publication of application: 20.12.2017
(73) Proprietor: Pappaglione, Luca, 38123 Trento (IT)
(72) Inventor: Pappaglione, Luca, 38123 Trento (IT)
(74) Representative: Branca, Emanuela

(56) References cited:
- WO-A1-79/00522
- WO-A2-2012/091472
- DE-C- 801 874
- DE-U1-202012 001 685
- US-A- 3 956 944
- US-A- 4 938 732

## Description

The present invention refers to a continuous bicycle speed variator system.

The motion transmission system of current bicycles usually comprises a central crankset assembly and a rear cassette. The crankset is made up of the pedals to which the front crowns on which the chain engages are connected. The rear cassette, on the other hand, is fixedly connected to the central portion of the rear wheel. The rear sprockets usually have a range from 6 to 11 different gear ratios and thus ensure from 6 to 11 different speeds.

The chain simultaneously engages on a front gear and on a rear sprocket causing the transmission of motion. By varying the sprockets engaged, i.e. passing from one sprocket circumference to another, the gear ratio of the bicycle is changed.

Such a type of speed variator system, however, has the drawback that the variation of the gear ratio is sequential/discrete, in steps, i.e. passing from one defined ratio to the next without possibility of intermediate adjustments.

Currently, in the field particularly of racing bicycles, there is a particularly great need to have a speed variator system that allows continuous variation of the ratio, without steps. Such a type of variation of the ratio, indeed, makes it possible to best adapt to the physical requirements of the athlete and to the type of pedalling.

An alternative speed variator system, which tends towards this type of continuous ratio and replaces the sprocket set described above is the planetary speed variator system or drum speed variator system. Such a speed variator system comprises a planetary gear train made up of a solar toothed wheel fixedly connected to the pin of the central portion of the rear wheel on which the planetary toothed wheels engage.

Such a rear speed variator system is completely integrated in the central portion of the rear wheel of the bicycle and therefore is particularly resistant to damage and accidental slipping of the chain or belt. However, this type of
planetary speed variator system is particularly heavy and therefore cannot be used in modern racing bicycles that tend to be particularly light so as not to constitute an obstacle to the pedalling of the athlete. Moreover, the rear speed variator system has a low variation of the minimum and maximum ratio. The transmission of torque to the wheel is also not constant but oscillates based on the position of the solar wheels and of the planetary wheels.

Another alternative speed variation system for bicycles disclosed in the document US-A-3956944, which document discloses the features of the preamble of claim 1, is provided with a plurality of chain engaging segments slidingly affixed between a first pair of disks and are constrained to move in a radial direction with respect thereto. A second pair of disks, rigidly attached to a shaft, are disposed adjacent the first pair of disks and engage a projection on the segments in spiral slots. The torque applied to the sprocket controls the relative rotation between the first and second pair of disks and causes the chain engaging segments to move in a radial direction. The chain engaging segments have teeth movably attached thereto. The teeth are depressed radially inwardly when contacted on the top by a chain roller.

The purpose of the present invention is therefore that of solving the problems just outlined.

In particular, a purpose of the present invention is to provide a transmission system for a bicycle, like for example a racing bicycle, which has a continuous speed variator system, capable of ensuring a continuous, non-sequential/discrete, variation of the gear ratio.

A yet further purpose is that such a speed variator system is particularly light so as to also be able to be installed on racing bicycles.

A further purpose is that the speed variator system is easy to use and to actuate.

Such purposes are accomplished by the bicycle speed variator system according to the invention the essential characteristics of which are defined by the first of the attached claims.

The characteristics and advantages of the speed variator system according to the invention will become clearer from the following description of an embodiment, given as an example and not for limiting purposes, with reference to the attached drawings, in which:

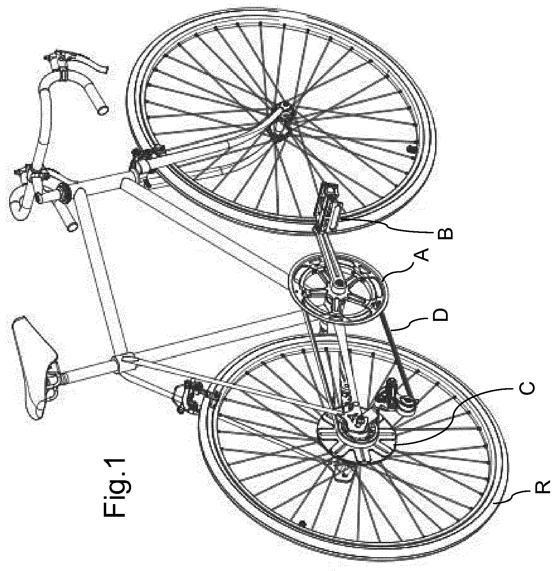

- figure 1 shows a bicycle that installs a transmission system that comprises the speed variator system according to the invention;
- figure 2 is a further view of the bicycle of figure 1;
- figure 3 is an enlargement of the portion highlighted in figure 2 and indicated by reference sign III, in which it is possible to see, in isolation, the speed variator system according to the invention in a maximum gear ratio position, i.e. maximum speed position;
- figure 4 again shows in isolation the speed variator system of figure 3 in a front view, again in maximum gear ratio position;
- figure 5 is a cross section view of the speed variator system in such a maximum gear ratio position;
- figure 6 represents a front view of the speed variator system in the minimum gear ratio position, i.e. minimum speed position;
- figure 7 shows a cross section of the speed variator system of figure 6;
- figure 8 is a representation in exploded side view of an assembly between a first and a second disc of the speed variator system and piston means thereof, together with an engagement sleeve of such discs on the shaft of the wheel;
- figures 9 and 10 are two perspective views of such an assembly again shown exploded;
- figure 11 represents the assembly of figure 8 in assembled version;
- figure 12 is a front view of the assembly of figure 8; and
- figure 13 shows a cross section of the assembly of figure 11 and of figure 12.

With reference to said figures, the transmission system comprises a front gear A connected to the bicycle frame and set in rotation by the movement of pedals B. A speed variator system C according to the invention, on the other hand, is installed on the rear wheel of the bicycle, at the shaft of the rear wheel itself. A transmission belt D is suspended between the speed variator system and the front gear, said belt D transmitting the rotation motion of the front gear to the speed variator system and therefore, consequently, to the rear wheel, causing the movement of the bicycle. The front gear, given the use of the belt as transmission means, is of the poly-V type. This does not rule out the possibility that the crown can also be toothed, if a chain is used as transmission means instead of the belt.

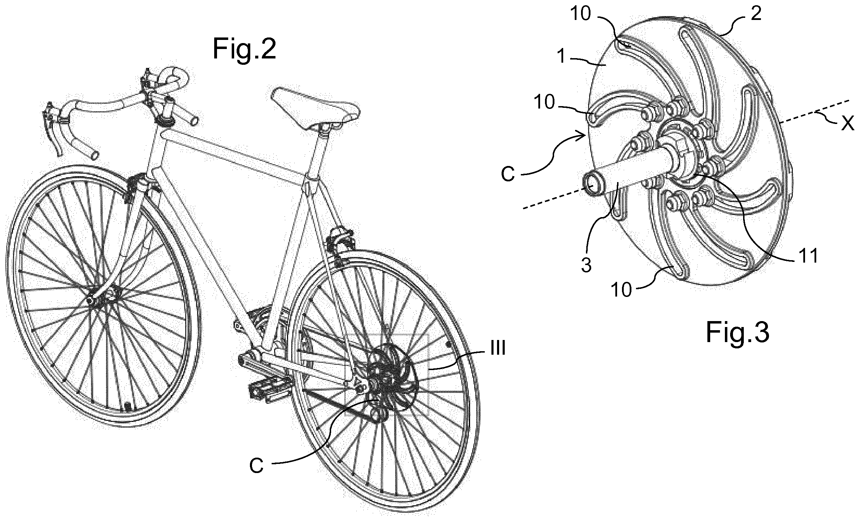

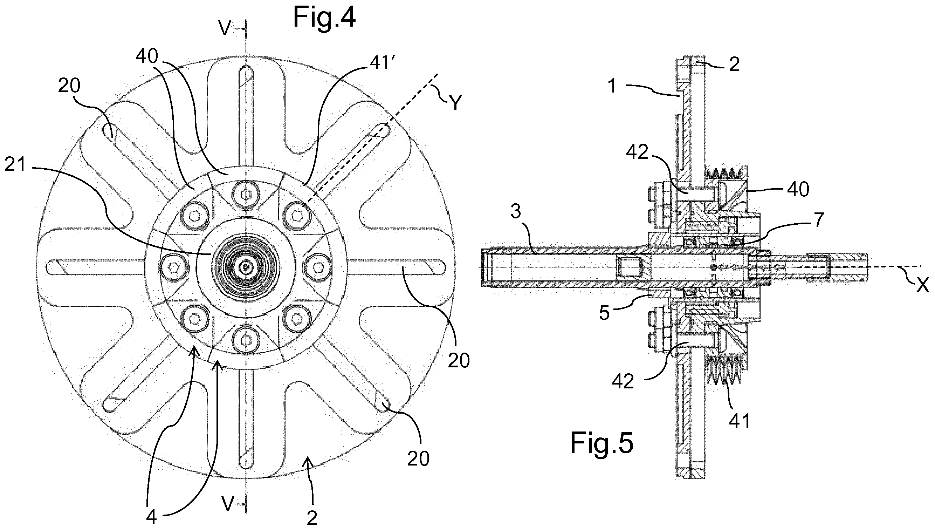

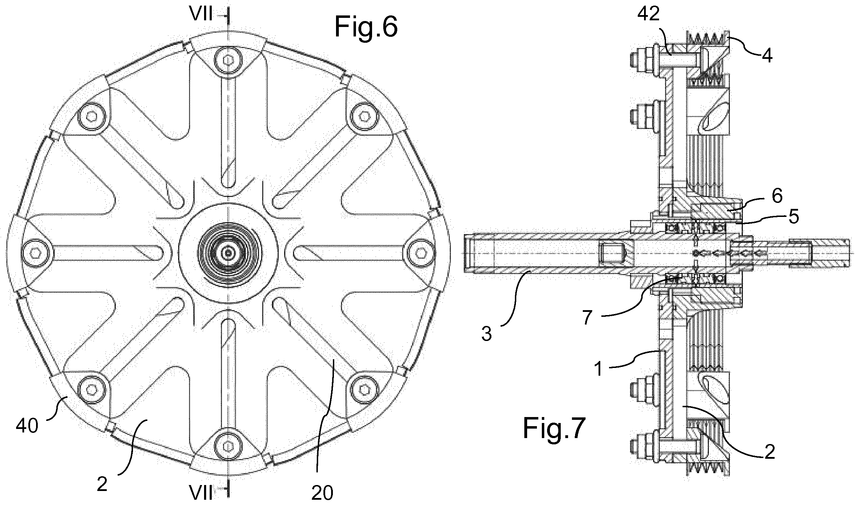

Coming to the speed variator system, more specifically object of the present invention and with particular reference to figures 3 to 7, this comprises a first and a second disc, 1 and 2, substantially of equal diameter, fitted onto a shaft 3 that is also the attachment and rotation shaft of the rear wheel R with respect to the frame. The shaft 3 defines a rotation axis X of the rear wheel.

The first disc or fixed disc 1 is mounted in a fixed or non-rotatable manner with respect to the shaft 3, whereas the second disc or mobile disc 2 is mounted in a rotatable manner with respect to the shaft 3. Therefore, the two discs can mutually rotate about the rotation axis X.

The fixed disc 1 has first sliding means 10 comprising curved carvings, (figure 3). The carvings 10 extend from a central portion 11 of the fixed disc towards its outer perimeter, and are distributed on the surface of the disc in a regular spaced arrangement.

The mobile disc 2 similarly has second sliding means 20 such as linear carvings that extend in a radial arrangement and in a regular spaced arrangement from a central portion 21 of the disc itself. Each of the linear carvings defines a sliding direction Y, perpendicular with respect to the rotation axis X, and arranged on the plane defined by the disc 2.

Simultaneously in such first and second sliding means a plurality of supporting means 4 slidingly engage for the engagement with the transmission belt C.

Each of the supporting means 4 comprises a support element 40 that in turn provides a curved surface 41 for engagement with the transmission belt C, whereby the plurality of support elements 40 and of the respective curved surfaces 41 defines a driven disc 41', with centre on the rotation axis X, on which the transmission belt C engages. The plurality of support elements 40 thus defines the driven wheel of the bicycle transmission.

As stated above, each of the supporting means 4 is engaged simultaneously in the first linear carvings 10 and the second linear carvings 20, and is free to slide, as a result of the mutual rotation movement between the two discs, about the axis X, between a maximum gear ratio position, corresponding to the position of the supporting means 4 closer to the rotation shaft 3, to a minimum gear ratio position, corresponding to the position of the supporting means 4 further from the rotation shaft 3, i.e. closer to the outer perimeter of the discs 1 and 2.

Such sliding of the supporting means 4 towards the outer perimeter of the discs determines their radial separation with respect to the rotation axis X, and thus the increase in diameter of the driven disc 41'. Vice-versa, their return sliding towards the shaft 3 determines a coming together of the supporting means and therefore a reduction in diameter of the driven disc 41'.

The simultaneous engagement of each support element 40 with the respective carvings is obtained by means of a pin 42 that extends from the support element 40 and slidably inserts in the carvings themselves. The pin 42 is in a parallel arrangement with the rotation axis X.

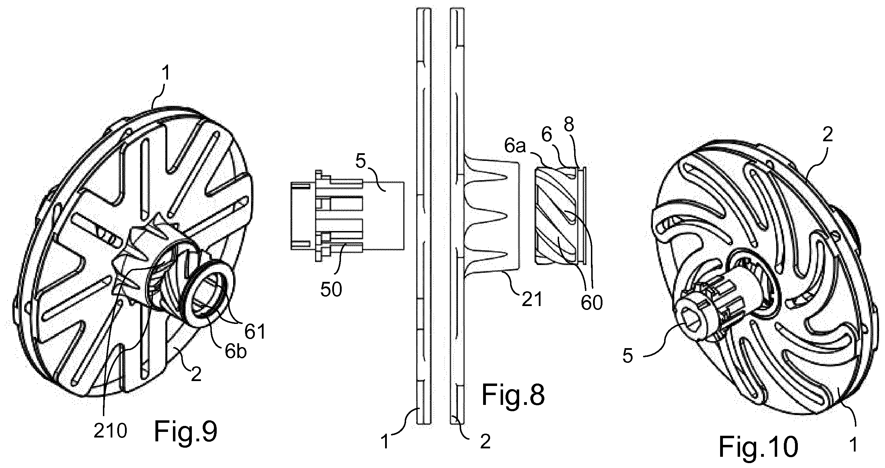

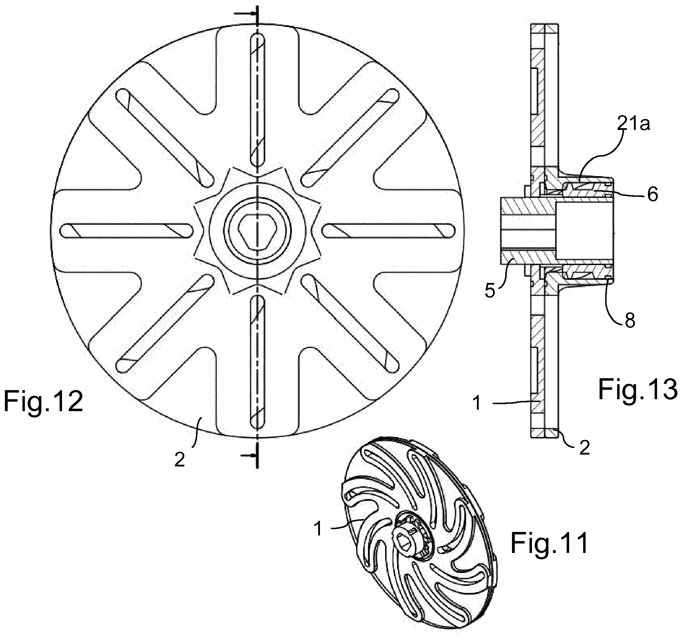

Now with reference also to figures 9 to 13, the two discs are engaged coaxially on the shaft through a tubular sleeve element 5, or more simply sleeve. The rotation of the mobile disc 2 with respect to the shaft 3 is then obtained by means of piston means 6 housed internally in a central portion 21 of the mobile disc 2 that in turn engages coaxially on the sleeve element 5.

The piston means 6 are slidably associated with the sleeve element so as to be able to slide along the sliding direction parallel to the rotation axis X. These comprise first engagement means 60 that engage with respective second engagement means 210 of the central portion 21 of the mobile disc 2. The mutual engagement between the first and the second engagement means 60, 210 determines the transformation of the linear sliding motion of the piston means 6 according to the direction parallel to the axis X, into the rotation motion of the mobile disc 2 with respect to the rotation axis X.

The piston means 6 thus comprise a tubular cylindrical body that engages rotatably and coaxially on the sleeve element 5 and in the central portion 21. On the outer wall 6a of the tubular cylindrical body, the aforementioned first engagement means are formed, as curved grooves 60.

On the inner wall 21a of the central portion 21, on the other hand, projections 210 are obtained that define the aforementioned second engagement means and have dimensions such as to engage in the curved grooves 60.

On the inner wall 6b of the piston, on the other hand, longitudinal projections 61 are formed for the engagement with relative guides 50 obtained on the sleeve element, so as to ensure the correct linear translation between piston and sleeve.

Coming to the operation of the piston means 6, these are made to slide along the direction parallel to the axis X by means of the supply in channels defined between piston and sleeve of a pressurised fluid such as oil. The piston means thus act similarly to the head of a hydraulic piston. A certain amount of linear sliding corresponds to a certain rotation angle of the mobile disc 2 and thus a certain linear translation of the support elements 40.

The pressurised fluid is supplied in the channels by means of a hydraulic circuit system that engages the rotation shaft 3 and a spacer element 7 that is arranged between sleeve 5 and shaft 3 and that separates the mounting bearings of the sleeve on the shaft along the axis X, according to a known mounting solution and therefore not described any further in detail.

Furthermore, in order to avoid the leaking of oil from the channels, the piston means provide anti-leak elements 8 such as grooves for the insertion of known gaskets, therefore not described in detail.

The speed variator system according to the innovation obtains a series of unexpected advantages. In particular, the speed variator system obtains the continuous variation of the gear ratio, without steps or jumps from on ratio to another. This is particularly important in the field of racing bicycles, since the speed variator system adapts perfectly to the pedalling requirements of the athlete.

Moreover, the speed variator system according to the invention is better than the known speed variator systems described above also in that it is particularly light and therefore this makes it able to be installed even in light or super-light bicycles, i.e. with frame made of carbon fibre or other alloys or materials having analogous characteristics of strength and lightness.

Thanks to the oil-hydraulic actuation, moreover, the speed variator system is particularly easy to actuate and has simple operation. It is therefore easy in terms of maintenance and repair.

As well as the use of the belt as transmission element, it is possible to foresee variants where the transmission element is a conventional chain.

The speed variator system according to the invention can be installed on bicycles already on the market without modifications needing to be made to the frame, to the wheels or to other components.

Furthermore, the speed variator system according to the invention is associated with a single front gear.

Finally, in combination with pedalling force measurers (also of the known type) it can allow the automatic actuation of gearshifting in order to obtain an automatic bicycle speed variator system.

The present invention has been described with reference to a preferred embodiment. It should be understood that there can be other embodiments that derive from the same inventive core, all encompassed by the scope of protection of the claims given below.

## Claims

1. Bicycle speed variator system adapted to be comprised in a motion transmission system of a bicycle, said motion transmission system further including a front motion gear (A) moved by pedals (B) and a transmission means (D) tensed between said front gear and said bicycle speed variator system, said bicycle speed variator system comprising a first fixed disc (1) and a second mobile disc (2) both adapted to be mounted in a coaxially arrangement with a rotation shaft (3) of a rear wheel of said bicycle, said shaft (3) defining a rotation axis (X) of said second mobile disc (2), said first fixed disc (1) comprising a plurality of first sliding means (10) and said second mobile disc comprising a plurality of second sliding means (20), a plurality of supporting means (4) engaging in a sliding manner simultaneously with said first sliding means (10) and with said second sliding means (20), said supporting means (4) being adapted, in a working configuration, to support said transmission means (D), said supporting means (4), as a result of the mutual rotation movement of said second mobile disc (2) with respect to said first fixed disc (1) around said axis (X), sliding on said first and second sliding means (10, 20) between a position of maximum transmission ratio, wherein said plurality of supporting means (4) are in a position proximal to said shaft (3), to a position of minimum transmission ratio, wherein said plurality of supporting means are in a position proximal to the outer perimeter of said discs (1, 2), said bicycle speed variator system **characterized in that**:
the transmission means (D) is a belt and **in that** the system further comprises piston means (6) housed inside a central portion (21) of said second mobile disc (2) and coaxially on said shaft (3) said piston means (6) being sliding inside said central portion in a direction parallel to said rotation axis (X), said piston means (6) comprising first engagement means (60) which engage with relative second engagement means (210) of said mobile disc (2), the mutual engagement between said first and second engagement means (60, 210) causing the rotation around the axis (X) of said mobile disc (2) as a result of the sliding of said piston means (6) according to said direction parallel to said axis (X).

2. The bicycle speed variator system according to claim 1, wherein each of said supporting means (4) comprises a support element (40) engaging in a sliding manner simultaneously into a respective of said first and second sliding means (10, 20) said support element providing a curved surface (41) adapted to engage, in a working configuration, with said transmission belt, the plurality of said curved surfaces (41) defining a driven disc (41') of said transmission system coaxially arranged on said rotation axis (X).

3. The bicycle speed variator system according to claim 2, wherein said first sliding means (10) comprise curved carvings extending from a central portion (11) of said first disc for the engagement with said shaft (3) to an outer perimeter of said disc, said carvings being arranged in a regular spaced arrangement around said central portion (11).

4. The bicycle speed variator system according to claim 3, wherein said second sliding means (20) comprise linear carving extending in a radial arrangement and in a regular spaced arrangement from the centre of said mobile disc.

5. The bicycle speed variator system according to claim 4, wherein each support element (40) comprises a pin (42) projecting from the support (40) and adapted to be slidingly inserted in said curved carving (10) and in said linear carving (20) said pin (42) being parallel to said rotation axis (X).

6. The bicycle speed variator system according to claim 1, wherein a tubular sleeve (5) is adapted to be mounted on said shaft (3), in an interposed arrangement between said piston means (6) and said shaft itself, said tubular sleeve being coaxially to said piston means and the latter sliding on said tubular sleeve according to said direction parallel to said axis (X).

7. The bicycle speed variator system according to claim 1 or 6, wherein said piston means comprises a tubular cylindrical body adapted to be engaged in a rotational arrangement and coaxially onto the shaft (3), said first engaging means (60) being obtained on an outer surface (6a) of said tubular cylindrical body, said first engaging means comprising curved grooves (60).

8. The bicycle speed variator system according to claim 7, wherein said second engagement means (210) comprise projections obtained on a inner surface of said central portion (21) and adapted to engage with said grooves (60).

9. The bicycle speed variator system according to claim 8, further comprising a hydraulic circuit system (6) for the supplying of a flow of a pressured fluid in channels defined between said piston means and said sleeve (5), in order to obtain the sliding of said piston means according to said direction parallel to said axis (X) with respect to said sleeve (5).

## Patentansprüche

1. Fahrrad-Drehzahlvariator, der dazu geeignet ist, in einem Bewegungsübertragungssystem eines Fahrrads enthalten zu sein, wobei das Bewegungsübertragungssystem ferner ein mittels Pedalen (B) bewegtes vorderes Bewegungsgetriebe (A) und eine Übertragungsvorrichtung (D) aufweist, die zwischen dem vorderen Getriebe und dem Fahrrad-Drehzahlvariator gespannt ist, wobei der Fahrrad-Drehzahlvariator eine erste feste Scheibe (1) und eine zweite bewegliche Scheibe (2) umfasst, die beide dazu geeignet sind, in einer koaxialen Anordnung mit einer Drehwelle (3) eine Hinterrades des Fahrrads eingebaut zu werden, wobei die Welle (3) eine Drehachse (X) der zweiten beweglichen Scheibe (2) definiert, wobei die erste feste Scheibe (1) eine Mehrzahl von ersten Gleitmitteln (10) umfasst und die zweite bewegliche Scheibe eine Mehrzahl von zweiten Gleitmitteln (20) umfasst, wobei eine Mehrzahl von Stützmitteln (4) auf verschiebliche Weise gleichzeitig die ersten Gleitmittel (10) und die zweiten Gleitmittel (20) in Eingriff nimmt, wobei die Stützmittel (4) dazu geeignet sind, in einer Arbeitsstellung die Übertragungsmittel (D) abzustützen, wobei die Stützmittel (4) infolge der gegenseitigen Drehbewegung der zweiten beweglichen Scheibe (2) in Bezug auf die erste feste Scheibe (1) um die Achse (X) auf den ersten und zweiten Gleitmitteln (10, 20) gleiten, zwischen einer Stellung maximalen Übersetzungsverhältnisses, in der die Mehrzahl von Stützmitteln (4) sich in einer Stellung nahe der Welle (3) befinden, in eine Stellung minimaler Übertragungsverhältnisses, in der die Mehrzahl von Stützmitteln sich in einer Stellung nahe des äußeren Umfangs der Scheiben (1, 2) befindet, wobei der Fahrrad-Drehzahlvariator **dadurch gekennzeichnet ist, dass**:
die Übertragungsvorrichtung (D) ein Riemen ist und das System ferner Kolbenmittel (6) umfasst, die in einem mittleren Abschnitt (21) der zweiten beweglichen Scheibe (2) und koaxial auf der Welle (3) untergebracht sind, wobei die Kolbenmittel (6) in dem mittleren Abschnitt in eine Richtung parallel zu der Drehachse (X) gleiten, wobei die Kolbenmittel (6) erste Eingriffmittel (60) umfassen, die in relative zweite Eingriffmittel (210) der beweglichen Scheibe (2) eingreifen, wobei das gegenseitige Eingreifen zwischen den ersten und der zweiten Eingriffmitteln (60, 210) die Drehung um die Achse (X) der beweglichen Scheibe (2) infolge des Gleitens der Kolbenmittel (6) in die Richtung parallel zu der Achse (X) bewirkt.

2. Fahrrad-Drehzahlvariator nach Anspruch 1, wobei jedes Stützmittel (4) ein Stützelement (40) umfasst, das auf verschiebliche Weise gleichzeitig jeweils eines der ersten und zweiten Gleitmittel (10, 20) in Eingriff nimmt, wobei das Stützelement eine gebogene Oberfläche (41) aufweist, die dazu geeignet ist, in einer Arbeitskonfiguration den Übertragungsriemen in Eingriff zu nehmen, wobei die Mehrzahl der gebogenen Oberflächen (41) eine Abtriebsscheibe (41') des koaxial auf der Drehachse (X) angeordneten Übertragungssystems definiert.

3. Fahrrad-Drehzahlvariator nach Anspruch 2, wobei die ersten Gleitmittel (10) gebogene Gravuren aufweisen, die sich von einem mittleren Abschnitt (11) der ersten Scheibe zur Eingriffnahme der Welle (3) auf einem äußeren Umfang der Scheibe erstrecken, wobei die Gravuren regelmäßig voneinander beabstandet rund um den mittleren Abschnitt (11) angeordnet sind.

4. Fahrrad-Drehzahlvariator nach Anspruch 3, wobei die zweiten Gleitmittel (20) lineare Gravuren umfassen, die sich in einer radialen Anordnung und vom Mittelpunkt der beweglichen Scheibe regelmäßig beabstandet erstrecken.

5. Fahrrad-Drehzahlvariator nach Anspruch 4, wobei jedes Stützelement (40) einen Stift (42) umfasst, der aus dem Stützelement (40) auskragt und dazu geeignet ist, auf verschiebliche Weise in die gebogene Gravur (10) und in die lineare Gravur (20) eingefügt zu werden, wobei der Stift (42) parallel zu der Drehachse (X) ist.

6. Fahrrad-Drehzahlvariator nach Anspruch 1, wobei eine rohrförmige Hülse (5) dazu geeignet ist, auf der Welle (3) in einer Zwischenstellung zwischen den Kolbenmitteln (6) und der Welle selbst eingebaut zu werden, wobei die rohrförmige Hülse koaxial zu den Kolbenmitteln ist und Letztere auf der rohrförmigen Hülse in eine Richtung parallel zu der Achse (X) gleiten.

7. Fahrrad-Drehzahlvariator nach Anspruch 1 oder 6, wobei die Kolbenmittel einen rohrförmigen, zylindrischen Körper umfassen, der dazu geeignet ist, in einer Drehanordnung koaxial auf der Welle (3) in Eingriff genommen zu werden, wobei die ersten Eingriffmittel (60) auf einer äußeren Oberfläche (6a) des rohrförmigen, zylindrischen Körpers erhalten sind, wobei die ersten Eingriffmittel gebogene Rillen (60) umfassen.

8. Fahrrad-Drehzahlvariator nach Anspruch 7, wobei die zweiten Eingriffmittel (210) Auskragungen umfassen, die auf einer inneren Fläche des mittleren Abschnitts (21) erhalten und dazu geeignet sind, die Rillen (60) in Eingriff zu nehmen.

9. Fahrrad-Drehzahlvariator nach Anspruch 8, ferner umfassend ein Hydraulikkreissystem (6) zum Zuführen eines Stromes einer druckbeaufschlagten Flüssigkeit in Kanälen, die zwischen den Kolbenmitteln und der Hülse (5) definiert sind, um das Gleiten der Kolbenmittel in die Richtung parallel zu der Achse (X) in Bezug auf die Hülse (5) zu erhalten.

## Revendications

1. Système de variateur de vitesse de bicyclette apte à être compris dans un système de transmission de mouvement d'une bicyclette, ledit système de transmission de mouvement comprenant en outre un engrenage à mouvement avant (A) déplacé par des pédales (B) et un moyen de transmission (D) tendu entre ledit engrenage avant et ledit système de variateur de vitesse de bicyclette, ledit système de variateur de vitesse de bicyclette comprenant un premier disque fixe (1) et un second disque mobile (2), tous deux aptes à être montés dans une disposition coaxiale avec un arbre de rotation (3) d'une roue arrière de ladite bicyclette, ledit arbre (3) définissant un axe de rotation (X) dudit second disque mobile (2), ledit premier disque fixe (1) comprenant une pluralité de premiers moyens coulissants (10) et ledit second disque mobile comprenant une pluralité de seconds moyens coulissants (20), une pluralité de moyens de support (4) s'engageant de manière coulissante et de façon simultanée avec lesdits premiers moyens coulissants (10) et avec lesdits seconds moyens coulissants (20), lesdits moyens de support (4) étant aptes, dans une configuration de travail, à supporter lesdits moyens de transmission (D), lesdits moyens de support (4), suite au mouvement de rotation mutuel dudit second disque mobile (2) par rapport au dit premier disque fixe (1) autour dudit axe (X), glissant sur lesdits premiers et seconds moyens coulissants (10, 20) entre une position de rapport de transmission maximum, dans laquelle ladite pluralité de moyens de support (4) sont dans une position proche dudit arbre (3), et une position de rapport de transmission minimum, dans laquelle ladite pluralité de moyens de support sont dans une position proche du périmètre extérieur desdits disques (1, 2), ledit système de variateur de vitesse de bicyclette est **caractérisé en ce que** :
le moyen de transmission (D) est une courroie et **en ce que** le système comprend en outre des moyens de piston (6) logés à l'intérieur d'une partie centrale (21) dudit second disque mobile (2) et de façon coaxiale sur ledit arbre (3), lesdits moyens de piston (6) coulissant à l'intérieur de ladite partie centrale dans une direction parallèle au dit axe de rotation (X), lesdits moyens de piston (6) comprenant des premiers moyens d'engagement (60) qui s'engagent avec des seconds moyens d'engagement relatifs (210) dudit disque mobile (2), l'engagement mutuel entre lesdits premiers et seconds moyens d'engagement (60, 210) provoquant la rotation autour de l'axe (X) dudit disque mobile (2), suite au glissement desdits moyens de piston (6) selon ladite direction parallèle au dit axe (X).

2. Système de variateur de vitesse de bicyclette selon la revendication 1, dans lequel chacun desdits moyens de support (4) comprend un élément de support (40) qui s'engage de manière coulissante, simultanément, dans l'un respectif desdits premiers et seconds moyens coulissants (10, 20), ledit élément de support fournissant une surface incurvée (41) apte à s'engager, dans une configuration de travail, avec ladite courroie de transmission, la pluralité desdites surfaces incurvées (41) définissant un disque entraîné (41') dudit système de transmission, disposé de manière coaxiale sur ledit axe de rotation (X).

3. Système de variateur de vitesse de bicyclette selon la revendication 2, dans lequel lesdits premiers moyens coulissants (10) comprennent des sculptures incurvées qui s'étendent depuis une partie centrale (11) dudit premier disque pour l'engagement avec ledit arbre (3) jusqu'à un périmètre extérieur dudit disque, lesdites sculptures étant disposées dans une disposition d'espacement régulier autour de ladite partie centrale (11).

4. Système de variateur de vitesse de bicyclette selon la revendication 3, dans lequel lesdits seconds moyens coulissants (20) comprennent une sculpture linéaire qui s'étend dans une disposition radiale et dans une disposition d'espacement régulier un espacement régulier à partir du centre dudit disque mobile.

5. Système de variateur de vitesse de bicyclette selon la revendication 4, dans lequel chaque élément de support (40) comprend une goupille (42) faisant saillie à partir du support (40) et apte à être insérée par coulissement dans ladite sculpture incurvée (10) et dans ladite sculpture linéaire (20), ladite goupille (42) étant parallèle au dit axe de rotation (X).

6. Système de variateur de vitesse de bicyclette selon la revendication 1, dans lequel un manchon tubulaire (5) est apte à être monté sur ledit arbre (3), dans une disposition interposée entre lesdits moyens de piston (6) et ledit arbre lui-même, ledit manchon tubulaire étant coaxial par rapport aux dits moyens de piston et ceux-ci glissant sur ledit manchon tubulaire selon ladite direction parallèle au dit axe (X).

7. Système de variateur de vitesse de bicyclette selon la revendication 1 ou 6, dans lequel lesdits moyens de piston comprennent un corps cylindrique tubulaire apte à être engagé dans une disposition de rotation et de manière coaxiale sur l'arbre (3), lesdits premiers moyens d'engagement (60) étant obtenus sur une surface extérieure (6a) dudit corps cylindrique tubulaire, lesdits premiers moyens d'engagement comprenant des rainures incurvées (60).

8. Système de variateur de vitesse de bicyclette selon la revendication 7, dans lequel lesdits seconds moyens d'engagement (210) comprennent des saillies obtenues sur une surface interne de ladite partie centrale (21) et aptes à s'engager avec lesdites rainures (60).

9. Système de variateur de vitesse de bicyclette selon la revendication 8, qui comprend en outre un système de circuit hydraulique (6) pour fournir un débit d'écoulement de fluide sous pression dans des canaux définis entre lesdits moyens de piston et ledit manchon (5), afin d'obtenir le coulissement desdits moyens de piston suivant ladite direction parallèle au dit axe (X) par rapport au dit manchon (5).
